# EUROPEAN PATENT APPLICATION

(11) **EP 2 682 277 A1**
(43) Date of publication of application: **08.01.2014**
(21) Application number: 13182673.7
(22) Date of filing: 28.09.2010
(51) Int. Cl.: B44C 5/06, B29C 47/88, A41G 1/00, B29C 47/00, E04B 2/80

(54) **Plastic imitation branch**

(30) Priority: 29.09.2009 BE 200900597
(62) Divisional of application: 10180635.4
(71) Applicant: Solidor bvba, 8930 Lauwe (BE)
(72) Inventor: Dejans, Emmanuel, 8930 Lauwe (BE); Dejans, Olivier, 8930 Lauwe (BE)
(74) Representative: BiiP cvba

(57) **Abstract**

Imitation branch comprising a plastic strand (3) wherein the plastic strand is locally provided with modifications to its surface structure over at least part of its outer surface, characterized in that said modifications are irregular.

## Description

The present invention, on the one hand, relates to a method for producing imitation branches, in which a polymer mass is melted under pressure, is then forced through an extruder head and is drawn from said extruder head in the form of an elongate plastic strand, which is subsequently cooled and is shortened to the desired length. On the other hand, the present invention relates to an imitation branch produced in accordance with said method.

The present invention relates in particular to a method for producing imitation branches, also referred to as fake branches, suitable for making separating walls, decorative walls, furniture, decorative material, etc.

Making separating walls or other embodiments by using natural branches (e.g. hazel) or another natural material is known per se. Thus, the Dutch patent publication NL 1032935 describes a wall structure filled with whole coconut husks or parts thereof, in which these are clamped on and enclosed between two layers of mesh in such a manner that the coconut husks remain clamped between the latter.

The use of natural materials, in particular natural branches, when producing separating walls, furniture and/or decorative material, has the drawback that these die over the course of time (approximately 5 years), which is unaesthetic and makes it possible to look through the product made from natural branches.

It is an object of the present invention to provide a solution to the abovementioned problem.

The US patent publication US-A-3 664 790 describes a method for providing more distinctive, predetermined and decorative patterns on extruded articles. This is accomplished by applying an additional material in the die, on the plastic strand or by subjecting the plastic strand to an additional treatment, just after it has left the die and before it is cooled, for example: a rotary movement or temporarily stopping the advancement of the plastic strand. By means of the method described in US-A-3 664 790, it is possible to predetermine exactly in which location the distinctive and decorative patterns will be produced on the end product.

The object of the invention is achieved by providing a method for producing imitation branches, in which a polymer mass is melted under pressure, is then forced through an extruder head and is drawn from this extruder head in the form of an elongate plastic strand, which is subsequently cooled and is shortened to the desired length, in which the plastic strand is at least partly drawn through a moving cooling medium during cooling, in which the plastic strand is completely submerged in said cooling medium for at least part of its path through the cooling medium, as a result of which the outer surface of the plastic strand is at least partly provided with irregular modifications to the surface structure. As a result of using a moving cooling medium, an irregular and turbulent way of cooling is created so that a plastic strand having an outer surface with an irregular shape is produced. The modifications to the surface structure occur during cooling, so that the plastic strand is thus provided with an irregular pattern, the result of which on the end product cannot be predetermined.

Completely submerging the plastic strand in the cooling medium has the advantage that the plastic strand is provided with the indentations across its entire periphery. Preferably, the plastic strand is submerged shortly after it has left the extruder head.

In the context of the present invention, modifications to the surface structure are intended to mean: uneven structures, indentations, local thickenings, swirls, line patterns, etc. which are provided in an irregular and arbitrary way. Those applying the method cannot possibly determine beforehand at which location the modifications will occur in the surface structure of the end product.

Compared to natural branches, imitation branches made from plastic have the advantage that they have a much longer service life (at least 15 years), they are perfectly recyclable and they do not die. In addition, they are UV-resistant.

By means of the method according to the invention, it is perfectly possible to produce an imitation branch which can hardly be distinguished from a natural branch. The manufactured imitation branch is preferably hollow or solid.

In a preferred method according to the present invention, the cooling medium is water and air and/or nitrogen bubbles are provided on at least part of the outer surface of the plastic strand during cooling. The presence of such bubbles ensures that the surface of the plastic strand is insulated from the cooling medium at irregular positions, as a result of which the cooling process is completely different in those positions from the positions where there are no air and/or nitrogen bubbles. At the location of the areas where air and/or nitrogen bubbles have been present during the cooling process, circular and/or oval indentations, also referred to as knots, are formed in the surface of the plastic strand. Such indentations enhance the natural appearance.

With a particular method according to the present invention, at the extruder head outlet, the speed at which the polymer mass is forced through the extruder head differs on the various sides of the extruder head outlet with respect to one another. Due to the lower flow velocity of the polymer mass, the plastic strand will have a ribbed surface at that location.

With a more particular method according to the present invention, the manufactured imitation branch is subjected to an after-treatment. Preferably, one or more of the following after-treatments are chosen: sanding, brushing, sandblasting, drawing through a teflon-coated heatable die and/or hot-air blowing.

According to a preferred method according to the present invention, the polymer mass comprises a thermoplastic material. In particular, the polymer mass comprises a foamable plastic, such as for example HDPE, PE, or another known foamable plastic.

Another subject of the present patent application relates to an imitation branch, comprising a plastic strand, in which said plastic strand is locally provided with irregular and arbitrary modifications to the surface structure. Said plastic strand preferably has a diameter which is variable in the longitudinal direction.

In a preferred embodiment of the imitation branch according to the invention, the latter is produced according to the method as described above.

The present invention furthermore relates to a wall panel comprising a number of imitation branches according to the present invention, the use of such imitation branches in the production of wall panels, flower boxes, furniture or similar embodiments and to a wall structure, comprising such a wall panel, in which said wall structure comprises a metal or wooden frame, between which or on which the wall panel is fitted.

In order to further explain the features of the present invention and to indicate additional advantages and particulars thereof, a more detailed description of the method according to the invention is given below. It will be clear that nothing in the following description can be interpreted as a limitation of the scope of protection sought in the claims.

In this description, reference numerals are used to refer to the attached drawings, in which:
- *Fig. 1**: shows a representation of a number of imitation branches (**Figs. 1a, 1b, 1c and 1d**) according to the present invention;*
- *Fig.* 2: *shows a diagrammatic representation of a number of possible production processes (**Figs. 2a and 2b**) for producing imitation branches.*

The present invention relates essentially to a method for producing imitation branches (1) from foamed plastic material. Such manufactured imitation branches (1) are perfectly suitable for making separating walls, decorative walls, furniture, decorative material, flower pots and the like. The branches (1) produced are very flexible and can consequently also be woven.

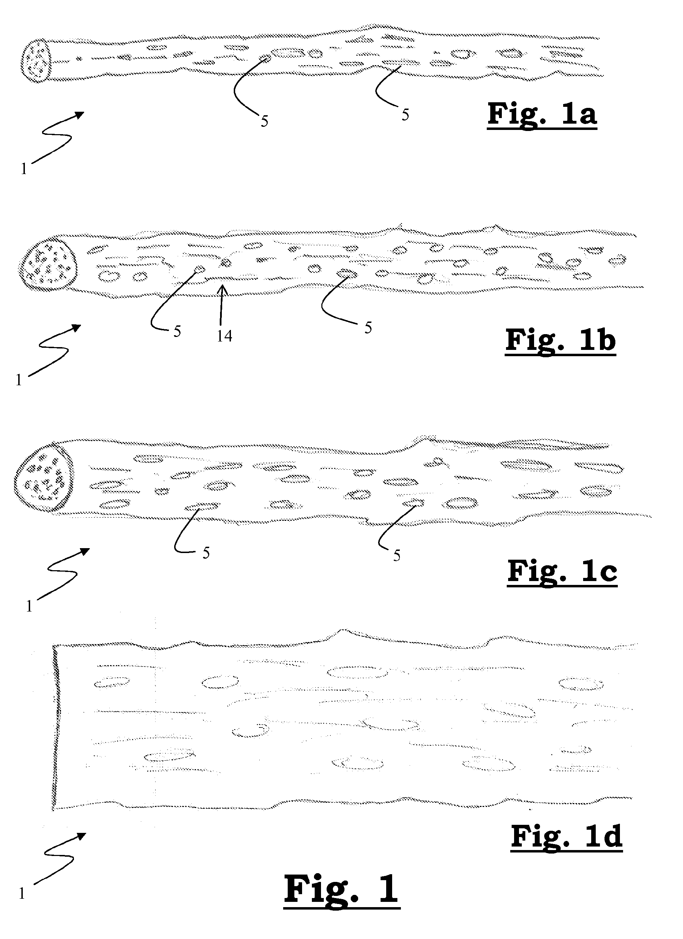

Compared to natural branches, imitation branches (1) have the significant advantage that they have a much longer service life. In addition, they can be recycled and their quality hardly deteriorates. Normally, the imitation branches (1) have a diameter which is between 10 and 26 mm, preferably between 12 and 24 mm. Fig. 1 shows a number of possible embodiments of imitation branches (1) according to the invention, with Fig. 1a being an illustration of an imitation branch (1) with a diameter of essentially 14 mm, Fig. 1b showing an imitation branch (1) with a diameter of 18 mm and Fig. 1c showing an imitation branch (1) with a diameter of 22 mm. The diameter is essentially determined by the extrusion opening, the foaming velocity and the speed of the drawing device. Instead of imitation branches (1) having a round cross section, it is also possible to produce plate-shaped imitation branches (1) using the method according to the invention, for example by modifying the shape of the extrusion opening. Fig. 1d illustrates such a flat imitation branch (1) which has a width of approximately 40 mm.

With imitation branches (1) made of plastic, it is important that their external appearance hardly differs from branches made of natural material. This effect is achieved by producing the branches (1) in accordance with the method according to the invention. According to the present invention, a polymer mass is melted under pressure in an extrusion device (7), is then forced through an extruder head (2) and drawn from said extruder head (2) by means of a drawing device (8) in the form of an elongate plastic strand (3), which is then cooled and cut to the desired length. The specific appearance which imitates that of a natural branch virtually perfectly is achieved by at least partly drawing the plastic strand (3), during the cooling process thereof, through a moving cooling medium (4). As a result of the 'turbulent' cooling, the plastic strand (3) is at least partly provided with irregular (arbitrary) modifications to the surface structure on its outer surface. Once the modifications have been made to the surface structure, the plastic strand (3) can be dried, for example by running it past a drying device (9).

The polymer mass used mainly comprises a thermoplastic material, such as for example PE or HDPE. However, other known plastics are also covered by the scope of protection of the present invention. Preferably, foamable plastic material is used.

Various additives can also be added to the polymer mass, such as for example UV-stabilizers, flame retardants, pigments, etc.

Since a branch is being imitated, the outlet of the extruder head (2) is circular or oval. By modifying the internal shape of the die, it is possible, if desired, to produce additional surface effects on the plastic strand (3). However, it is evident that apart from circular or oval branches, other shapes, for example plate-like shapes, of imitation branches are also covered by the scope of protection of the present invention.

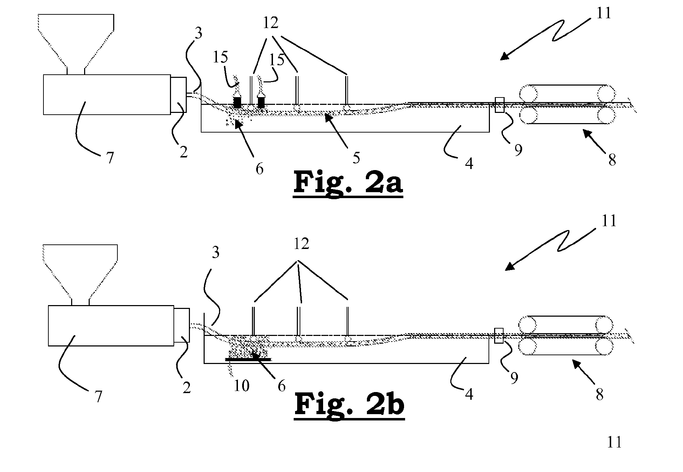

In many cases, water is used as the cooling medium (4). During the cooling process as illustrated in Figs. 2a and 2b, air and/or nitrogen bubbles (6) are provided on at least part of the plastic strand (3). The presence of such bubbles (6) ensures that the surface of the plastic strand (3) is isolated from the cooling medium (4) at irregular positions, as a result of which the cooling process is completely different in those specific positions from the positions where no air and/or nitrogen bubbles (6) are present. In those positions where air and/or nitrogen bubbles (6) were present during the cooling process, circular indentations, oval indentations, indentations with a blown centre and/or bubbles are formed in the surface of the plastic strand (3). Such indentations enhance the natural appearance and can be compared to the so-called knots or shoots which are present in natural branches.

Tests have shown that the depth of the indentation, indentation with blown centre, bubble depends on the size of the air bubble; large air bubbles result in deeper indentations than smaller ones.

The air and/or nitrogen bubbles (6) can be introduced into the cooling medium (4) in various ways. Thus, air bubbles can be produced by continuously running a stream of water into the cooling bath. Another possibility is to aerate the cooling bath continuously by means of an aerating system (10) (see Fig. 2b). Air bubbles can also (see Fig. 2a) be formed by projecting liquid (water) droplets onto the surface of the cooling medium (4) by using one or more liquid-projecting device(s) (15).

As can be seen in Fig. 2a and 2b, the plastic strand (3) is completely submerged in the cooling medium (4) for at least part of its path through this cooling medium (4). This has the advantage that the plastic strand (3) can be provided with the indentations across its entire periphery. Preferably, the plastic strand (3) is submerged shortly after leaving the extruder head (2).

Since the plastic strand (3) has a specific weight which is less than 1 and therefore floats on the water surface, the device (11) for producing imitation branches (1) comprises means which keep the plastic strand (3) submerged for at least part of its path. The present device is denoted by reference numeral 12 in Figs. 2a and 2b.

When the plastic strand (3) is not submerged, it floats on the liquid surface of the cooling medium (4). In this case, the part of the plastic strand (3) which comes into contact with the cooling medium (4), for example water, will exhibit a line pattern/structure (14).

However, the modifications (5) to the surface structure can also be produced in other ways. Thus, the plastic strand (3) can be guided over a conveyor belt (13) after it has left the extruder head (2) in which case the plastic strand (3) is cooled by the air (cooling medium). The surface structure is modified by projecting a liquid, preferably water droplets, onto the plastic strand (3) via the liquid-projecting device (15). The water droplets will produce uneven structures on the outer surface.

In order to make additional modifications to the surface structure of the plastic strands (3), it is for example also possible to vary the flow rate of the polymer mass, or to carry out extrusion at temperatures which are lower than those which are normally used.

Once the plastic strands (3) have cooled down, they leave the device (11) via the drawing device (8) and are cut to the desired length and packaged. The cut length depends on the kind of packaging: if the plastic strands (3) are rolled up, they are cut to lengths of 100 to 150 metres and if they are packaged individually, they are cut to lengths of 1 to 5 metres.

Before or after the manufactured imitation branch (1) is packaged (for weaving or fitting, as desired) it can be subjected to an after-treatment (not illustrated in the attached figures). Preferably, one or more of the following after-treatments are chosen: sanding, brushing, sandblasting, drawing through a teflon-coated heatable die and/or hot-air blowing. During after-treatment, various different kinds of means can be used, such as for example: sanding paper of different grain size, steel brushes, copper brushes, and sandblasting using various granules, such as: metal granules, glass granules, and various sand grains (coarse, large, etc.).

The manufactured imitation branches (1) are ideally suited to be used in the production of various embodiments, such as for example: separating walls, noise barriers, decorative walls, furniture, decorative material, and the like. Thus, when manufacturing, for example, separating walls (wall structure), a number of such imitation branches will be fitted (possibly woven) between or on a wooden or metal frame structure.

It is obvious that the above-described method can also be used for producing other shaped bodies, such as for example profiled sections, plate-shaped elements or any other shaped body made of plastic which is to have a natural appearance.

## Claims

1. Imitation branch comprising a plastic strand (3) wherein the plastic strand is locally provided with modifications to its surface structure over at least part of its outer surface, **characterized in that** said modifications are irregular.

2. Imitation branch according to claim 1, wherein the modifications are arbitrary.

3. Imitation branch according to claim 1 or 2, wherein said modifications are present over the entire outer surface of the plastic strand.

4. Imitation branch according to any of the preceding claims, wherein said modifications are indentations in the outer surface of the plastic strand.

5. Imitation branch according to claim 4, wherein said indentations vary in depth.

6. Imitation branch according any of the preceding claims, having a essentially round cross section.

7. Imitation branch according to claim 6, having a diameter of between 10 and 26mm.

8. Imitation branch according to any of the preceding claims, wherein the plastic strand is manufactured from a polymer mass comprising a foamable plastic.

9. Imitation branch according to any of the preceding claims, wherein the plastic strand is manufactured from a polymer mass comprising a thermoplastic material selected from the group comprising PE or HDPE.

10. Wall panel comprising at least one imitation branch as identified in any of claims 1 to 9.

11. Wall panel according to claim 10, wherein said panel comprises at least two imitation branches, said branches are woven.

12. Wall structure comprising a wall panel as identified in claims 10 or 11, in which said wall panel is fitted in a metal or wooden frame.
